# NEUE EUROPÄISCHE PATENTSCHRIFT

(11) **EP 1 827 868 B2**
(45) Veröffentlichungstag und Bekanntmachung des Hinweises auf die Entscheidung über den Einspruch: **11.01.2017**
(45) Hinweis auf die Patenterteilung: 27.02.2013
(21) Anmeldenummer: 05824266.0
(22) Anmeldetag: 16.12.2005
(51) Int. Cl.: B42D 25/00, G06K 1/12

(54) **KARTENFÖRMIGER DATENTRÄGER**
CARD-SHAPED DATA CARRIER
SUPPORT DE DONNEES EN FORME DE CARTE

(30) Priorität: 17.12.2004 DE 102004061635
(43) Veröffentlichungstag der Anmeldung: 05.09.2007
(73) Patentinhaber: Giesecke & Devrient GmbH, 81677 München (DE)
(72) Erfinder: MAURER, Thomas, 80639 München (DE)
(74) Vertreter: Zeuner, Stefan
(86) Internationale Anmeldenummer: PCT/EP2005/013543
(87) Internationale Veröffentlichungsnummer: WO 2006/066803

(56) Entgegenhaltungen:
- EP-A- 0 956 975
- EP-B1- 0 861 156
- EP-B1- 0 871 574
- WO-A-2005/048182
- WO-A1-02/30677
- WO-A1-98/19869
- DE-A1- 10 226 114
- DE-A1- 10 226 116
- DE-A1- 19 934 434
- DE-A1- 19 941 295
- DE-C2- 10 064 616
- DE-T2- 69 607 977
- DE-T2- 69 620 636
- US-A- 4 747 620
- US-A- 4 766 026
- US-A- 5 815 292
- US-A1- 2004 022 967
- US-A1- 2004 229 022
- US-B1- 6 179 338

## Beschreibung

Die Erfindung betrifft kartenförmige Datenträger, insbesondere kartenförmige Datenträger, die mit einem Laserschreiber personalisiert werden. Die Erfindung betrifft auch Verfahren zum Herstellen derartiger kartenförmiger Datenträger.

Ausweiskarten, wie beispielsweise Kreditkarten oder Personalausweise werden seit langem mittels Lasergravur personalisiert und dabei beispielsweise mit einem Passbild oder anderen personenbezogenen Daten versehen. Zur Personalisierung einer Ausweiskarte durch Lasergravur werden in der Regel die optischen Eigenschaften des Substratmaterials der Karte durch geeignete Führung eines Laserstrahls in Gestalt einer gewünschten Kennzeichnung irreversibel verändert, insbesondere geschwärzt. Es wird in diesem Zusammenhang insbesondere auf die DE 29 07 004 B1 sowie die DE 31 51 407 C1 verwiesen.

Aus der Druckschrift US-A-4 747 620 ist ein kartenförmiger Datenträger bekannt, der jeweils an der Ober- und Unterseite mit einer metallischen Beschichtung versehen ist. Zur Einbringung von Sicherheitsmerkmalen wird die Beschichtung mit einem Laser an den gewünschten Stellen geschwärzt.

Die US 2004/229022 A1 beschreibt eine Karte mit zwei sich überlappenden Metallschichten, mit teilweise deckungsgleichen Löchern, die im Durchlicht betrachtet werden können. Als weiteres Sicherheitsmerkmal wird die Möglichkeit der Einführung von Diskontinuitäten der Metallschicht beschrieben, die dadurch erzielt wird, dass mithilfe einer Maske im Wege des Thermotransfers das Aufbringen des Metalls auf die ansonsten unveränderte Trägerschicht gesteuert wird. Dabei bezeichnet der Ausdruck "discontinuities" Aussparungen in der Metallschicht, die eingesetzt werden, um zusammen mit einer Druckschicht einen Positiv/Negativeffekt zu erzielen.

Die Druckschrift EP 0 936 975 B1 zeigt und beschreibt des Weiteren ein Dokument, insbesondere einen Pass mit einem Sicherheitsmerkmal in Form eines durchgehenden Perforationsmusters, welches vorzugsweise ein im Durchlicht zu prüfendes Passbild darstellt. Das Sicherheitsmerkmal wird als ImagePerf ® zusammen mit üblichen laserpersonalisierten Daten, etwa gemäß der DE 31 51 407 C1, im Markt präsentiert.

Die Perforationsmuster derartiger Sicherheitsdokumente werden mit einem Infrarot-CO₂-Laser einer Wellenlänge von 10,6 µm hergestellt. Zusätzlich werden die Dokumente mit einem im nahen Infrarot emittierenden Nd:YAG-Laser in herkömmlicher Weise durch lokale Schwärzung der Dokumentensubstrate personalisiert. Der Personalisierungsvorgang erfolgt somit in zwei getrennten Schritten auf zwei getrennten Laseranlagen. Dies birgt die Gefahr von Zuordnungsfehlern. Insbesondere kann beim Transfer der zu bearbeitenden Dokumente zwischen den beiden Laseranlagen der Datenzusammenhang verloren gehen oder verwechselt werden, so dass ein Dokument unter Umständen in der ersten Laseranlage mit einem ersten Personalisierungsdatensatz und in der zweiten Laseranlage mit einem anderen Personalisierungsdatensatz versehen wird.

Darüber hinaus weisen die bekannten Perforationsmuster, die in der Regel durch Löcher in einer weißen, durchscheinenden Inlettfolie erzeugt werden, aufgrund zu geringer Opazität nur einen geringen Kontrast auf, so dass das damit gebildete Echtheitsmerkmal wenig auffällig wirkt und von manchen Benutzern gar nicht wahrgenommen wird. Zudem erfährt das Material der Inlettfolie durch die durchgehenden Löcher eine Schwächung.

Ausgehend davon liegt der Erfindung die Aufgabe zugrunde, einen Datenträger vorzuschlagen, der die Nachteile des Standes der Technik vermeidet. Insbesondere soll der Datenträger ein Sicherheitsmerkmal mit einer in Durchsicht erkennbaren Information aufweisen, das mit einem einzigen Laserschreiber in einem einzigen Personalisierungsvorgang herstellbar ist und das einen höheren Kontrast zum Datenumfeld aufweist.

Diese Aufgabe wird durch den kartenförmigen Datenträger mit den Merkmalen der Hauptansprüche gelöst. Herstellungsverfahren für einen derartigen kastenförmigen Datenträger sind in nebengeordneten Ansprüchen angegeben. Weiterbildungen der Erfindung sind Gegenstand der Unteransprüche.

Gemäß der Erfindung weist ein kartenförmiger Datenträger einen Kartenkörper bzw. ein Karteninlett mit einer Oberseite, einer Unterseite und einer Dicke von mehr als 100 µm, vorzugsweise ungefähr 800 µm, auf. Auf seiner Ober- und Unterseite ist der Kartenkörper zumindest in einem Teilbereich jeweils mit einer metallischen Beschichtung versehen, welche einander bei Betrachtung in Durchsicht zumindest teilweise überlappen. In den metallischen Beschichtungen sind Löcher, aufeinander abgestimmte Rastermuster, vorgesehen, die in einer vorbestimmten Betrachtungsrichtung in Durchsicht eine zu den metallischen Beschichtungen kontrastierende Information darstellen.

Die von den Rastermustern dargestellte Information tritt vor ihrem metallischen Umfeld in Durchsicht im Bereich eines vorgegebenen Betrachtungswinkels deutlich und mit hohem Kontrast in Erscheinung. Wie nachfolgend genauer erläutert, liegt dabei ein charakteristischer, scharfer Kippeffekt vor, bei dem die dargestellte

Bevorzugt enthält die von den Rastermustern dargestellte Information alphanumerische Zeichen, Muster und/oder ein Bildmotiv. Je nach gewünschter Darstellung kann die Information in Aufsicht bzw. Durchsicht als Positivbild oder Negativbild erscheinen.

Die Rastermuster weisen vorzugsweise einen deckungsgleichen Musterbereich auf, der in Durchsicht, z.B. bei senkrechter Betrachtung des Datenträgers, in Erscheinung tritt. Die Rastermuster können aber auch zwei oder mehr Musterbereiche aufweisen, die in Durchsicht unter unterschiedlichen Betrachtungswinkeln in Erscheinung treten.

Der anfangs erwähnte Kippeffekt ist in einem Parallaxeneffekt begründet. Bei Betrachtung des Rastermusters im Durchlicht entsteht nur dann ein Kontrast, wenn die auf Vorder- und Rückseite vorgesehenen Rasterpunkte in Blickrichtung exakt übereinander angeordnet sind bzw. "fluchten". Nur dann gelangt von der Rückseite durch die Rasterpunkte Licht ins Auge des Betrachters. Fluchten die Rasterpunkte nicht, werden die Durchlichtkanäle unterbrochen und es entsteht kein optischer Kontrast zwischen opakem Umfeld und lichtdurchlässigen Rasterpunkten.

Die Rastermuster des erfindungsgemäßen Datenträgers sind so aufeinander abgestimmt, dass die Information in Durchsicht nur in einem engen Winkelbereich um die vorbestimmte Betrachtungsrichtung erkennbar ist. Darüber hinaus erscheint zweckmäßigerweise die Information in Durchsicht in der vorbestimmten Betrachtungsrichtung mit hohem Kontrast zur metallischen Beschichtung.

Weiterhin sind gemäß einer ersten Gestaltung nach der Erfindung die Rastermuster aus Rasterelementen mit einer charakteristischen Abmessung aufgebaut, nämlich aus kreisscheibenförmigen Rasterpunkten mit einem Durchmesser d. Ein konstanter Durchmesser d bietet sich insbesondere für die Darstellung von alphanumerischen Zeichenketten oder Schwarz-Weiß-Bildern an. Auch Portraits und andere Halbtonbilder, die eine Mehrzahl abgestufter Helligkeitswerte aufweisen, können mit Rasterelementen konstanter Abmessung dargestellt werden, indem die Helligkeitswerte beispielsweise über den Abstand der Rasterelemente oder die Zahl der Rasterelemente pro Flächeneinheit eingestellt werden.

Gemäß einer zweiten Gestaltung nach der Erfindung sind die Rastermuster aus Rasterelementen mit variierenden charakteristischen Abmessungen aufgebaut, nämlich aus kreisscheibenförmigen Rasterpunkten mit variierendem Durchmesser. Die charakteristischen Abmessungen variieren dabei um einen zentralen Wert dz. Beispielsweise kann ein Portrait mit 6 Helligkeitsstufen aus Rasterpunkten mit den 5 Durchmesserwerten 0,5*dz, 0,75*dz, 1*dz, 1,25*dz und 1,5*dz aufgebaut sein. Ein sechster Wert ergibt sich durch rasterpunktfreie Bildbereiche.

In beiden Gestaltungen ist der Abstand der beiden metallischen Beschichtungen und der charakteristische Durchmesser der Rasterpunkte aufeinander abgestimmt, um die Sichtbarkeit der Information auf einen engen Winkelbereich zu begrenzen. Insbesondere ist der Abstand D der beiden metallischen Beschichtungen mit Vorteil größer als die charakteristische Abmessung bzw. der zentrale Abmessungswert dz der Rasterelemente. Vorzugsweise ist der Abstand der metallischen Beschichtungen mehr als doppelt so groß oder sogar mehr als viermal so groß wie die charakteristische Abmessung bzw. der zentrale Abmessungswert dz.

In einer Erfindungsvariante sind die Rastermuster Teil einer regelmäßigen Rasterstruktur mit festem Abstand der Rasterelemente, beispielsweise einem rechtwinkligen oder hexagonalen Gitter. In anderen Varianten ist eine weniger starre Anordnung der Rasterelemente ohne feste Abstandswerte vorteilhaft. In allen Fällen kann es zweckmäßig sein, wenn der Abstand benachbarter Rasterelemente größer als die charakteristische Abmessung bzw. der zentrale Abmessungswert dz ist.

Der Kippeffekt ist umso deutlicher, je größer das Verhältnis kumulierte Fläche der Rasterelemente zur verbleibenden Metallfläche ist. Je kleiner dabei die charakteristischen Durchmesser der Rasterelemente, bezogen auf den Abstand der beiden metallischen Beschichtungen, ist, umso enger ist der Winkelbereich, in dem das Kontrastmedium zu beobachten ist. Da nicht nur Licht durch die vorgegebenen Rasterelemente, sondern auch bei entsprechendem Kippwinkel durch benachbarte Rasterelemente zum Betrachter durchdringen kann, kann der gewünschte Effekt durchaus auch durch die Wahl zu enger Raster oder zu großer kumulierter Rasterelementfläche gestört bzw. verschlechtert werden. Es ist somit für jeden Anwendungsfall ein Optimum zu suchen, bei dem Bildauflösung, Kontrast und Störeffekte bei falschem Betrachtungswinkel aufeinander abgestimmt sind.

Der Kartenkörper des Datenträgers besteht bevorzugt aus einem ein- oder mehrschichtigem Kunststoffmaterial, insbesondere einer Kunststofffolie, und ist zumindest im Bereich der Rastermuster im sichtbaren Spektralbereich mit Vorteil transparent. In Versuchen wurde festgestellt, dass sich bei Verwendung eines transparenten Kartenkörpers, der beidseitig mit im Wesentlichen opaken metallischen Beschichtungen versehen ist, optimale Effekte erzielen lassen. Weniger opake Metallschichten hingegen reduzieren den Kontrast und schwächen den vorstehend beschriebenen Effekt entsprechend ab. Prinzipiell ist es aber auch möglich, den Kartenkörper transluzent auszugestalten. Dabei entsteht allerdings der Nachteil der Lichtstreuung, durch den einerseits die Lichtausbeute im Durchlicht reduziert wird und andererseits Störeffekte durch "fehlgeleitetes" bzw. gestreutes Licht, das nicht durch die vorgesehenen Durchlichtkanäle der entsprechenden Rasterelemente tritt, erzeugt werden. Demgemäß kann der erfindungsgemäße Effekt signifikant abgeschwächt werden bis nahezu vollständig verschwinden. Um das Perforationsmuster im Durchlicht möglichst markant erscheinen zu lassen, ist der Kartenkörper im Sinne der Erfindung daher so transparent bzw. so wenig streuend wie möglich auszuführen.

Darüber hinaus muss der Kartenkörper in diesem Fall keine durchgehenden Löcher aufweisen, um eine Durchsicht durch die beiden Rastermuster und den Kartenkörper zu ermöglichen. Selbstverständlich kann der Kartenkörper jedoch zumindest für einen Teil des Rastermusters auch durchgehende Löcher enthalten, deren Form und Größe zweckmäßig den einzelnen Rasterelementen entspricht.

Bei Verwendung einer transparenten Kunststofffolie als Kartenkörper des Kartenaufbaus kann es notwendig sein, die außerhalb der metallischen Beschichtungen vorgesehenen Bereiche des Datenträgers opak zu gestalten, weil sich sonst die Kartendaten auf Vor- und Rückseite gegenseitig stören. Der Kartenkörper kann dafür partiell, d.h. in den nicht mit der metallischen Beschichtung versehenen Bereichen, mit einer opaken Druckschicht versehen werden. Im Normalfall wird dies eine weiße Druckschicht sein. Sie kann aber auch beliebig farbig gestaltet werden. Wenn über diesen Kartenkörper transparente Deckfolien aufgebracht werden, ist das informationstragende Druckbild entweder auf der weißen Druckschicht oder auf einer der Seiten der Deckfolien vorzusehen.

In einer Erfindungsvariante enthält der Kartenkörper phosphoreszierende, fluoreszierende oder sonstige lumineszierende Stoffe. Dadurch lässt sich die zu den metallischen Beschichtungen kontrastierende Information auch mit einer Anregungsstrahlung außerhalb des sichtbaren Spektrums, beispielsweise mittels ultravioletter Strahlung, sichtbar machen. Gleichzeitig wird ein zusätzliches Echtheitsmerkmal bereitgestellt.

Die Dicke des Kartenkörpers liegt vorteilhaft zwischen 0,1 und 2 mm, bevorzugt zwischen 0,2 und 1,5 mm, und besonders bevorzugt zwischen 0,4 und 1 mm. Im Bereich der Rastermuster ist der Kartenkörper bevorzugt für Laserstrahlung im nahen Infrarot transparent oder nur schwach absorbierend. Die metallischen Beschichtungen sind in einer bevorzugten Ausführungsform im Inneren des Kartenkörpers eingebettet. Im Idealfall sind beide metallischen Beschichtungen jeweils mit einer dünnen Folie abgedeckt. Denselben Zweck kann auch eine auf beiden Seiten der Karte vorgesehene Schutzlackschicht erfüllen. Der Aufbau des Datenträgers kann je nach Anwendungszweck drei- oder inehrschichtig sein. Anzustreben ist dabei, dass die metallischen Beschichtungen möglichst weit auseinander liegend angeordnet sind, um den Parallaxeneffekt gut nutzen zu können. Gleichzeitig sollten diese aber zur Erhöhung ihrer Lebensdauer nicht auf den äußeren Oberflächen des Kartenkörpers ungeschützt bzw. völlig frei zugänglich sein.

Die Rastermuster beider metallischer Beschichtungen sind mit demselben Laserstrahlschreiber, insbesondere mit einem bei etwa 1,06 µm arbeitenden Laserstrahlschreiber erzeugt. Dabei bietet sich wegen seiner weiten Verbreitung vor allem der Einsatz von Nd:YAG-basierten Laserstrahlschreibern an.

Der erfindungsgemäße Datenträger weist mit Vorteil ein oder mehrere weitere Personalisierungsmerkmale auf, wobei die Rastermuster gemeinsam mit dem oder den weiteren Personalisierungsmerkmalen herstellbar sind. Bei dem weiteren Personalisierungsmerkmal kann es sich beispielsweise um eine in herkömmlicher Art und Weise eingebrachte Laserpersonalisierung handeln, wie sie in der Druckschrift DE 29 07 004 B1 oder der DE 31 51 407 C1, deren Offenbarung insoweit in die vorliegende Anmeldung aufgenommen wird, beschrieben ist.

In einer vorteilhaften Weiterbildung weist der Datenträger ein weiteres Echtheitsmerkmal auf, wie etwa ein in zumindest eine der beiden Metallschichten eingeprägte(s) Hologramm oder hologrammähnliche Beugungsstruktur.

Die Erfindung umfasst auch ein Verfahren zum Herstellen eines kartenförmigen Datenträgers nach Anspruch 18 bzw. Anspruch 19.

Die Rastermuster werden mit einem Laserstrahlschreiber in die metallischen Beschichtungen eingebracht, wobei die beiden Rastermuster bevorzugt in einem Arbeitsgang und mit demselben Laserstrahlschreiber von einer Kartenseite her in die metallischen Beschichtungen eingebracht werden. Es bietet sich an, die Rastermuster mit einem bei etwa 1,06 µm arbeitenden Laserstrahlschreiber, insbesondere mit einem Nd:YAG-basierten Laserstrahlschreiber, zu erzeugen, da derartige Laserschreiber in herkömmlichen Laseranlagen weit verbreitet sind.
Information nur in einem engen Winkelbereich um eine oder mehrere vorgegebene Betrachtungsrichtungen erkennbar ist.

Es wurde festgestellt, dass ab einer gewissen Laserleistung bzw. Laserenergie Löcher bzw. Perforationsmuster in den metallischen Beschichtungen entstehen. Diese Perforationsmuster können zum einen durch lokale Abtragung von Bereichen in den metallischen Beschichtungen entstehen. Sind die metallischen Beschichtungen mit Deckfolien versehen, lassen sich mithilfe eines Laserstrahlschreibers ebenfalls Perforationsmuster, d.h. transparente Bereiche, in den metallischen Beschichtungen, erzeugen. Die hierbei stattfindenden Prozesse sind derzeit allerdings nicht genau bekannt. Es wird vermutet, dass die metallischen Beschichtungen in den entsprechenden Bereichen lokal in eine transparente Modifikation chemisch umgewandelt oder zum Rand des Bereichs hin "weggeschrumpft" werden. In diesem Sinne sollen die vorstehenden, durch einen Laserstrahlschreiber in den metallischen Beschichtungen erzeugten Effekte im Rahmen der vorliegenden Beschreibung allgemein als Lochbildung bzw. Perforation bezeichnet werden.

Die Abtragung oder Umwandlung der metallischen Beschichtungen erfolgt mit einem Laserschreiber, dessen Laserleistung oder Laserenergie so eingestellt wird, dass die stark absorbierenden ober- und unterseitigen metallischen Beschichtungen jeweils abgetragen oder umgewandelt werden, der dazwischen liegende, nicht oder nur schwach absorbierende Kartenkörper sowie die gegebenenfalls darüber oder darunter liegende Deckfolie optisch jedoch nicht verändert, insbesondere nicht geschwärzt, werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Ausweiskarte nach einem Ausführungsbeispiel der Erfindung,
- Fig. 2: einen Querschnitt durch einen kartenförmigen Datenträger nach einem weiteren Ausführungsbeispiel der Erfindung,
- Fig. 3: eine Detailansicht eines Rastermusters, das Teil einer regelmäßigen Rasterstruktur ist, und
- Fig. 4: eine Ausweiskarte nach einem weiteren Ausführungsbeispiel der Erfindung.

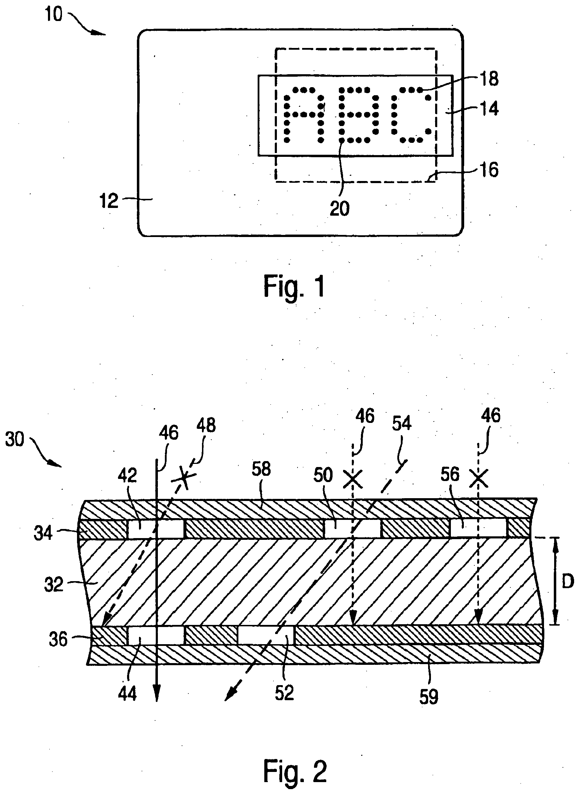

Fig.1 zeigt in schematischer Darstellung eine Aufsicht auf eine erfindungsgemäße Ausweiskarte 10. Auf der Oberseite 12 der Karte 10 ist in einem Teilbereich eine metallische Beschichtung 14 aufgebracht. Dazu überlappend ist die Kartenunterseite mit einer weiteren metallischen Beschichtung 16 versehen, die in der Figur durch gestrichelte Linien angedeutet ist. Der dazwischen liegende Kartenkörper ist zumindest im Überlappungsbereich der metallischen Beschichtungen 14, 16 transparent.

Im gezeigten Ausführungsbeispiel sind die beiden metallischen Beschichtungen 14 und 16 mit deckungsgleichen Perforationsmustem 18 aus einer Mehrzahl von kreisscheibenförmigen Rasterpunkten 20 versehen, die eine zur metallischen Beschichtung kontrastierende Information darstellen. Die Information kann ein Bildmotiv, insbesondere ein die Ausweiskarte personalisierendes Motiv, wie etwa ein Passbild, oder auch eine alphanumerische Zeichenkette, wie eine Seriennummer oder ein Gültigkeitsdatum, enthalten. In der Fig.1 ist zur Illustration lediglich die kurze Zeichenfolge "ABC" als Perforationsmuster 18 dargestellt.

Die von den Perforationsmustern 18 dargestellte Information, hier die Zeichenfolge "ABC", ist bei der üblichen Benutzung der Ausweiskarte 10 in Aufsicht im Reflexionswinkel gut erkennbar, da sich die metallfreien, perforierten Rasterpunkte 20 von ihrer metallischen Umgebung 14 abheben.

Zusätzlich tritt die Information der beiden Perforationsmuster 18 bei senkrechter Betrachtung der Karte vor einem hellen Hintergrund, wie beispielsweise einem Fenster oder einer Lichtquelle, deutlich in Erscheinung. Bei einer solchen Durchsichtbetrachtung tritt das von der Rückseite her einfallende Licht durch die deckungsgleichen Perforationsmuster 18 und den transparenten Kartenkörper hindurch und erzeugt für den Betrachter ein kontrastreiches Bild der durch die Perforationsmuster 18 dargestellten Information. Wie nachfolgend genauer erläutert, ist das Bild aufgrund der Abstimmung der Größe der Rasterpunkte 20 und der Dicke des Kartenkörpers nur in einem engen Winkelbereich um die senkrechte Betrachtungsrichtung sichtbar und verschwindet bei einer Kippbewegung der Karte 10 nahezu schlagartig.

Das Zustandekommen des scharfen Kippeffekts und weitere vorteilhafte Ausgestaltungen der Erfindung werden nun anhand der Schnittdarstellung der Fig. 2 erläutert, die einen Querschnitt durch einen erfindungsgemäßen kartenförmigen Datenträger 30 zeigt.

Der Datenträger 30 enthält einen im sichtbaren Spektralbereich transparenten Kartenkörper 32 aus einem Kunststoffmaterial, das auch im nahen Infrarot bei 1,06 µm noch vollständig oder zumindest weitgehend transparent ist. Die Dicke D des Kartenkörpers 32 beträgt einige hundert µm, beispielsweise etwa 800 µm. Ober- und Unterseite des Kartenkörpers 32 sind mit zumindest überlappenden metallischen Beschichtungen 34 bzw. 36 versehen, in die mit einem Laserschreiber aufeinander abgestimmte Rastermuster aus einer Mehrzahl von Rasterpunkten 42, 44, 50, 52 und 56 eingebracht sind. Die metallischen Beschichtungen 34 und 36 können ferner mit transparenten Deckfolien 58 bzw. 59 abgedeckt sein, die als Schutzschicht dienen.

Die Rastermuster sind durch Perforationsmuster, also durch lokal abgetragene oder umgewandelte Bereiche in den Metallschichten 34, 36 gebildet. Die Lochbildung erfolgt vorzugsweise von einer Seite der Karte, beispielsweise der Oberseite, her mit einem Laserstrahlschreiber, dessen Laserleistung oder Laserenergie so eingestellt wird, dass die stark absorbierenden ober- und unterseitigen Metallschichten jeweils abgetragen oder umgewandelt werden, der dazwischen liegende, nicht oder nur schwach absorbierende Kartenkörper optisch jedoch nicht verändert, insbesondere nicht geschwärzt wird. Sind wie in dem in Fig. 2 gezeigten Ausführungsbeispiel Deckfolien 58, 59 vorgesehen, ist die Laserleistung so einzustellen, dass weder der Kartenkörper noch die Deckfolien 58, 59 eine optische Veränderung erfahren.

Je nach Anwendung kann die Größe der einzelnen Rasterpunkte 42, 44, 50, 52 und 56 konstant oder variabel sein. Beispielsweise werden alphanumerische Zeichen typischerweise aus Rasterpunkten mit konstantem Durchmesser d gebildet, während Halbtonbilder, wie etwa Portraits, in der Regel Rasterpunkte variierender Größe enthalten, um unterschiedliche Helligkeitswerte des Bildes einfach wiederzugeben zu können. In letzterem Fall variieren die Durchmesser der Rasterpunkte um einen zentralen Durchmesserwert bzw. Mittelwert dz.

Die dargestellte Information kann auch beide Varianten kombinieren. Beispielsweise kann die Information eine Zeichenkette aus Rasterpunkten mit einem konstanten Durchmesser von d =100 µm enthalten, sowie ein Halbtonbild mit Rasterpunkten im Größenbereich von 50 µm bis 150 µm und einem zentralen Durchmesserwert dz = 100 µm.

In jedem Fall ist der Durchmesser d oder der zentrale Durchmesserwert dz der Rasterpunkte kleiner, vorzugsweise sogar wesentlich kleiner, als der Abstand D der beiden Metallschichten 34 und 36. Dadurch wird sichergestellt, dass die Information des Rastermusters nur in einem engen Winkelbereich um die gewünschte Betrachtungsrichtung erkennbar ist. Im beschriebenen Ausführungsbeispiel beträgt das Verhältnis von Rasterpunktdurchmesser d zum Abstand D der Metallschichten 100 µm/ 800 µm =1: 8, so dass sich ein Sichtbarkeitsbereich von ± ϕ/2 ≈ ± 3,5° ergibt.

Eine weitere, hier nicht dargestellte Möglichkeit, Halbtonbilder zu erzeugen, besteht ferner darin, verschiedene Helligkeitswerte des Bildes über die Zahl der Rasterpunkte pro Flächeneinheit einzustellen. Die Rasterpunkte weisen hierbei bevorzugt einen konstanten Durchmesser d auf.

Die Rastermuster der Fig. 2 enthalten eine erste Gruppe von Rasterpunkten 42 bzw. 44, die bei senkrechter Betrachtung zueinander deckungsgleich in den jeweiligen metallischen Beschichtungen 34 bzw. 36 angeordnet sind. Wie erläutert, ist die von diesen Rasterpunkten dargestellte erste Information in Aufsicht und zusätzlich in einem engen Winkelbereich um die senkrechte Betrachtungsrichtung 46 in Durchsicht erkennbar. Wird der Datenträger um mehr als etwa 3,5° aus der senkrechten Lage gekippt, wie in der Figur für die Betrachtungsrichtung 48 gezeigt, so trifft der Sehstrahl des Betrachters nach dem Durchtreten durch die Rasterpunkte 42 der oberseitigen Metallschicht 34 auf opake Bereiche der unterseitigen Metallschicht 36. Die dargestellt erste Information tritt daher aus der Betrachtungsrichtung 48 in Durchsicht nicht mehr in Erscheinung.

Weiter enthalten die Rastermuster eine zweite Gruppe von Rasterpunkten 50 bzw. 52, die gegeneinander versetzt in die jeweiligen metallischen Beschichtungen 34 bzw. 36 eingebracht sind, so dass die von ihnen dargestellte zweite Information in Durchsicht aus der senkrechten Betrachtungsrichtung 46 nicht, wohl aber aus einer gegen die Senkrechte gekippten Betrachtungsrichtung 54 erkennbar ist.

Beispielsweise kann die erste Information der Rasterpunkte 42, 44 ein Passbild und die zweite Information der Rasterpunkte 50, 52 einen das Passbild überlagernden Schriftzug darstellen. Bei Betrachtung in Aufsicht sind sowohl das Passbild als auch der Schriftzug zugleich erkennbar. Wird der Datenträger 30 dagegen in Durchsicht betrachtet, so ist bei senkrechter Betrachtung zunächst nur das Passbild erkennbar. Beim Kippen des Datenträgers auf die Betrachtungsrichtung 54 zu verschwindet das Passbild und der Schriftzug erscheint. Selbstverständlich können auch mehrere derartige Gruppen von Rasterpunkten für verschiedene Betrachtungsrichtungen vorgesehen sein.

Die Rasterpunkte 52 können auch mit den Rasterpunkten 50 fluchtend ausgerichtet, aber mit größerem Durchmesser als die Rasterpunkte 44 und 50 ausgebildet sein. In diesem Fall sind sowohl die erste Information der Rasterpunkte 42, 44 als auch die zweite Information der Rasterpunkte 50, 52 bei senkrechter Betrachtung in Durchsicht erkennbar. Beim Kippen des Datenträgers 30 verschwindet aufgrund des kleineren Durchmessers der Rasterpunkte 44 zunächst die erste Information, während die zweite Information noch erkennbar bleibt. Erst wenn der Datenträger weiter verkippt wird, verschwindet auch die zweite Information.

Die Rastermuster der Fig. 2 enthalten darüber hinaus eine dritte Gruppe von Rasterpunkten 56, die nur in die oberseitige Metallschicht 34 eingebracht sind und die keine Entsprechung in der unterseitigen Metallschicht 36 haben. Die von den Rasterpunkten 56 dargestellte dritte Information ist daher nur in Aufsicht von der Kartenoberseite her erkennbar. In gleicher Weise kann auch in die unterseitige Metallschicht 36 eine nur von der Rückseite her sichtbare Information eingebracht werden.

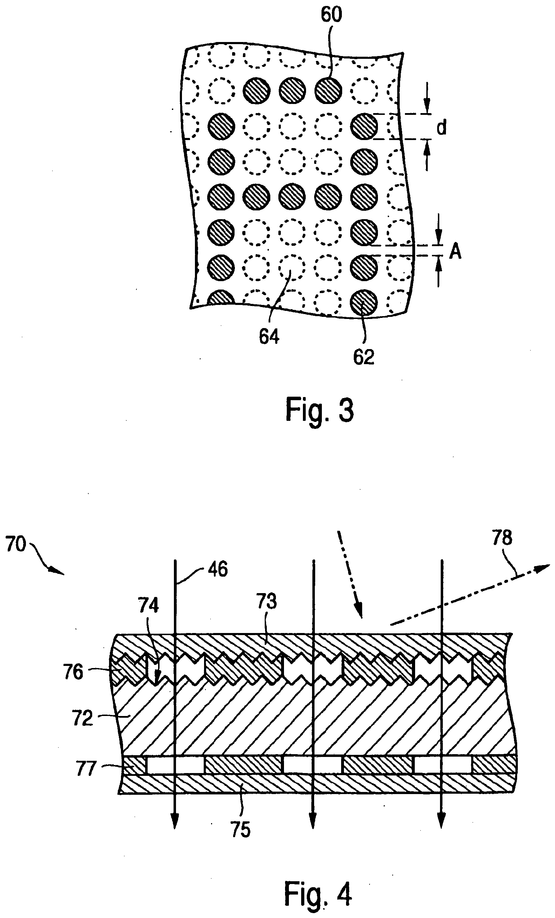

Fig. 3 zeigt eine Detailansicht eines Rastermusters 60, das Teil einer regelmäßigen Rasterstruktur mit festem Abstand der möglichen Positionen 64 der Rasterelemente ist. Im Ausführungsbeispiel weisen die eingebrachten Rasterelemente 62 einen konstanten Durchmesser d auf. Benachbarte Positionen 64 der Rasterelemente sind dann voneinander durch einen konstanten Abstand A getrennt, der vorzugsweise größer als der Durchmesser d der Rasterelemente ist.

Eine Ausweiskarte 70 nach einem weiteren Ausführungsbeispiel der Erfindung ist in Fig. 4 dargestellt. Der Aufbau der Ausweiskarte 70 entspricht weitgehend dem des Datenträgers 30 der Fig. 2. Im Unterschied dazu ist die Oberseite des Kartenkörpers 72 mit einer Reliefstruktur 74 versehen, die zusammen mit der metallischen Beschichtung 76 ein Hologramm oder eine hologrammähnliche Beugungsstruktur in der Ausweiskarte bildet. Auch hier können die metallischen Beschichtungen 76, 77 zum Schutz transparente Deckfolien oder Schutzlackschichten 73, 75 aufweisen, durch die hindurch bestimmte Bereiche der metallischen Beschichtungen mithilfe eines Laserstrahlschreibers in transparente Bereiche umgewandelt werden können, ohne dabei die Deckschichten 73, 75 bzw. den mit der Reliefstruktur 74 versehenen Kartenkörper 72 optisch zu verändern.

Neben den bereits in Zusammenhang mit Fig. 2 beschriebenen, in Aufsicht bzw. Durchsicht erkennbaren Informationen der Rastermuster liegt bei diesem Ausführungsbeispiel zur weiteren Erhöhung der Fälschungssicherheit ein Mikrorelief in der mit der Metallschicht 76 versehenen Oberseite des Kartenkörpers 72 vor, das ein Hologramm oder eine hologrammähnliche Beugungsstruktur darstellt. Das Mikrorelief kann entweder eine zusätzliche holographische Information oder spezifische Farbeffekte aufweisen, welche unter spezifischen Betrachtungswinkeln bzw. in einer spezifischen Betrachtungsrichtung 78 in Erscheinung treten.

## Patentansprüche

1. Kartenförmiger Datenträger (10) mit einem Kartenkörper mit einer Oberseite (12), einer Unterseite und einer Dicke von mehr als 100 µm, der auf seiner Ober- und Unterseite zumindest in einem Teilbereich jeweils mit einer metallischen Beschichtung (14, 16; 34, 36; 76, 77) versehen ist, wobei die beiden metallischen Beschichtungen (14, 16; 34, 36; 76, 77) einander bei Betrachtung in Durchsicht zumindest teilweise überlappen, und bei dem in den beiden metallischen Beschichtungen (14, 16; 34, 36; 76, 77) Rastermuster (60) vorgesehen sind, die in einer vorbestimmten Betrachtungsrichtung in Durchsicht eine zu den metallischen Beschichtungen (14, 16; 34, 36; 76, 77) kontrastierende Information darstellen und durch ein in die metallische Beschichtung (14, 16; 34, 36) eingebrachtes Perforationsmuster (18) gebildet sind, **dadurch gekennzeichnet, dass** die Rastermuster beider metallischer Beschichtungen (14, 16; 34, 36; 76, 77) mit demselben Laserstrahlschreiber erzeugt sind, dass die Information in Durchsicht nur in einem engen Winkelbereich um die vorbestimmte Betrachtungsrichtung erkennbar ist, wobei die Rastermuster (60) aus Rasterelementen mit einer charakteristischen Abmessung, nämlich aus kreisscheibenförmigen Rasterpunkten (20, 42, 44, 50, 52, 56, 62) mit einem Durchmesser d aufgebaut sind, und der Abstand der beiden metallischen Beschichtungen (14, 16; 34, 36; 76, 77) und die charakteristische Abmessung der Rasterelemente (20, 42, 44, 50, 52, 56, 62) aufeinander abgestimmt sind, um die Sichtbarkeit der Information auf einen engen Winkelbereich zu begrenzen.

2. Kartenförmiger Datenträger (10) mit einem Kartenkörper mit einer Oberseite (12), einer Unterseite und einer Dicke von mehr als 100 µm, der auf seiner Ober- und Unterseite zumindest in einem Teilbereich jeweils mit einer metallischen Beschichtung (14,16; 34, 36; 76, 77) versehen ist, wobei die beiden metallischen Beschichtungen (14,16; 34, 36; 76, 77) einander bei Betrachtung in Durchsicht zumindest teilweise überlappen, und bei dem in den beiden metallischen Beschichtungen (14,16; 34, 36; 76, 77) Rastermuster (60) vorgesehen sind, die in einer vorbestimmten Betrachtungsrichtung in Durchsicht eine zu den metallischen Beschichtungen (14,16; 34, 36; 76, 77) kontrastierende Information darstellen und durch ein in die metallische Beschichtung (14,16; 34, 36) eingebrachtes Perforationsmuster (18) gebildet sind, **dadurch gekennzeichnet, dass** die Rastermuster beider metallischer Beschichtungen (14,16; 34, 36; 76, 77) mit demselben Laserstrahlschreiber erzeugt sind, dass die Information in Durchsicht nur in einem engen Winkelbereich um die vorbestimmte Betrachtungsrichtung erkennbar ist, wobei die Rastermuster (60) aus Rasterelementen mit variierenden charakteristischen Abmessungen, nämlich aus kreisscheibenförmigen Rasterpunkten (20, 42, 44, 50, 52, 56, 62) mit variierendem Durchmesser aufgebaut sind, wobei die charakteristischen Abmessungen um einen zentralen Wert dz variieren, und der Abstand der beiden metallischen Beschichtungen (14,16; 34, 36; 76, 77) und der zentrale Abmessungswert dz aufeinander abgestimmt sind, um die Sichtbarkeit der Information auf einen engen Winkelbereich zu begrenzen.

3. Datenträger nach Anspruch 1 oder 2, **dadurch gekennzeichnet, dass** die von den Rastermustern (60) dargestellte Information alphanumerische Zeichen, Muster und/oder ein Bildmotiv darstellt.

4. Datenträger nach wenigstens einem der Ansprüche 1 bis 3, **dadurch gekennzeichnet, dass** die Rastermuster (60) einen deckungsgleichen Musterbereich aufweisen, der in Durchsicht bei senkrechter Betrachtung des Datenträgers (10) in Erscheinung tritt.

5. Datenträger nach wenigstens einem der Ansprüche 1 bis 4, **dadurch gekennzeichnet, dass** die Rastermuster (60) zwei oder mehr Musterbereiche aufweisen, die in Durchsicht unter unterschiedlichen Betrachtungswinkeln in Erscheinung treten.

6. Datenträger nach wenigstens einem der Ansprüche 1 bis 5, **dadurch gekennzeichnet, dass** die Information in Durchsicht in der vorbestimmten Betrachtungsrichtung mit hohem Kontrast zur metallischen Beschichtung (14,16; 34, 36; 76, 77) erscheint.

7. Datenträger nach wenigstens einem der Ansprüche 1 bis 6, **dadurch gekennzeichnet, dass** der Abstand der beiden metallischen Beschichtungen (14,16; 34, 36; 76, 77) größer als die charakteristische Abmessung d bzw. der zentrale Abmessungswert dz ist, bevorzugt, dass der Abstand der metallischen Beschichtungen (14,16; 34, 36; 76, 77) mehr als doppelt, insbesondere mehr als viermal so groß ist wie die charakteristische Abmessung bzw. der zentrale Abmessungswert dz.

8. Datenträger nach wenigstens einem der Ansprüche 1 bis 7, **dadurch gekennzeichnet, dass** die Rastermuster (60) Teil einer regelmäßigen Rasterstruktur mit festem Abstand der Rasterelemente (20, 42, 44, 50, 52, 56, 62) sind.

9. Datenträger nach wenigstens einem der Ansprüche 1 bis 8, **dadurch gekennzeichnet, dass** der Abstand benachbarter Rasterelemente (20, 42, 44, 50, 52, 56, 62) größer als die charakteristische Abmessung bzw. der zentrale Abmessungswert dz ist.

10. Datenträger nach wenigstens einem der Ansprüche 1 bis 9, **dadurch gekennzeichnet, dass** der Kartenkörper (32; 72) aus einem ein- oder mehrschichtigen Kunststoffmaterial, insbesondere einer Kunststofffolie besteht.

11. Datenträger nach wenigstens einem der Ansprüche 1 bis 10, **dadurch gekennzeichnet, dass** der Kartenkörper (32; 72) zumindest im Bereich der Rastermuster transparent ist.

12. Datenträger nach wenigstens einem der Ansprüche 1 bis 11, **dadurch gekennzeichnet, dass** der Kartenkörper (32; 72) eine Dicke von 0,1 bis 2 mm, bevorzugt von 0,2 bis 1,5 mm, besonders bevorzugt von 0,4 bis 1 mm aufweist.

13. Datenträger nach wenigstens einem der Ansprüche 1 bis 12, **dadurch gekennzeichnet, dass** der Kartenkörper (32; 72) im Bereich der Rastermuster (60) für Laserstrahlung im nahen Infrarot transparent oder nur schwach absorbierend ist.

14. Datenträger nach wenigstens einem der Ansprüche 1 bis 13, **dadurch gekennzeichnet, dass** die Rastermuster (60) beider metallischer Beschichtungen (14,16; 34, 36; 76, 77) mit einem bei etwa 1,06 µm arbeitenden Laserstrahlschreiber, besonders bevorzugt mit einem Nd:YAG-basierten Laserstrahlschreiber erzeugt sind.

15. Datenträger nach wenigstens einem der Ansprüche 1 bis 14, **dadurch gekennzeichnet, dass** der Datenträger ein oder mehrere weitere Personalisierungsmerkmale aufweist, und die Rastermuster (60) gemeinsam mit diesen herstellbar sind.

16. Datenträger nach wenigstens einem der Ansprüche 1 bis 15, **dadurch gekennzeichnet, dass** in mindestens eine der beiden metallischen Beschichtungen (14,16; 34, 36; 76, 77) die Struktur eines Hologramms oder eines Beugungsgitters aufgeprägt ist.

17. Datenträger nach wenigstens einem der Ansprüche 1 bis 16, **dadurch gekennzeichnet, dass** mindestens eine der beiden metallischen Beschichtungen (14,16; 34, 36; 76, 77) mit einer Deckfolie oder einer Schutzlackschicht (58, 59; 73, 75) versehen ist.

18. Verfahren zum Herstellen eines kartenförmigen Datenträgers (10), mit den Verfahrensschritten:
a) Bereitstellen eines Kartenkörpers (32; 72) mit einer Oberseite (12), einer Unterseite und einer Dicke von mehr als 100 µm,
b) Versehen von Ober- und Unterseite des Kartenkörpers (32; 72) zumindest in einem Teilbereich mit einander bei Betrachtung in Durchsicht zumindest teilweise überlappenden metallischen Beschichtungen (14,16; 34, 36; 76, 77), und
c) Einbringen von Rastermustern (60) mit einem Laserstrahlschreiber in die beiden metallischen Beschichtungen (14,16; 34, 36; 76, 77), um in einer vorbestimmten Betrachtungsrichtung in Durchsicht (46) eine zur metallischen Beschichtung kontrastierende Information darzustellen, die in Durchsicht nur in einem engen Winkelbereich um die vorbestimmte Betrachtungsrichtung erkennbar ist wobei die Rastermuster durch ein in die metallische Beschichtung (14,16; 34, 36) eingebrachtes Perforationsmuster (18) gebildet sind,
wobei die Rastermuster (60) aus Rasterelementen mit einer charakteristischen Abmessung, nämlich aus kreisscheibenförmigen Rasterpunkten (20, 42, 44, 50, 52, 56, 62) mit einem Durchmesser d aufgebaut werden, und der Abstand der beiden metallischen Beschichtungen (14,16; 34, 36; 76, 77) und die charakteristische Abmessung der Rasterelemente (20, 42, 44, 50, 52, 56, 62) aufeinander abgestimmt werden, um die Sichtbarkeit der Information auf einen engen Winkelbereich zu begrenzen.

19. Verfahren zum Herstellen eines kartenförmigen Datenträgers (10), mit den Verfahrensschritten:
a) Bereitstellen eines Kartenkörpers (32; 72) mit einer Oberseite (12), einer Unterseite und einer Dicke von mehr als 100 µm,
b) Versehen von Ober- und Unterseite des Kartenkörpers (32; 72) zumindest in einem Teilbereich mit einander bei Betrachtung in Durchsicht zumindest teilweise überlappenden metallischen Beschichtungen (14,16; 34, 36; 76, 77), und
c) Einbringen von Rastermustern (60) mit einem Laserstrahlschreiber in die beiden metallischen Beschichtungen (14,16; 34, 36; 76, 77), um in einer vorbestimmten Betrachtungsrichtung in Durchsicht (46) eine zur metallischen Beschichtung kontrastierende Information darzustellen, die in Durchsicht nur in einem engen Winkelbereich um die vorbestimmte Betrachtungsrichtung erkennbar ist wobei die Rastermuster durch ein in die metallische Beschichtung (14,16; 34, 36) eingebrachtes Perforationsmuster (18) gebildet sind,
wobei die Rastermuster (60) aus Rasterelementen mit variierenden charakteristischen Abmessungen, nämlich aus kreisscheibenförmigen Rasterpunkten (20, 42, 44, 50, 52, 56, 62) mit variierendem Durchmesser aufgebaut sind, wobei die charakteristischen Abmessungen um einen zentralen Wert dz variieren, und der Abstand der beiden metallischen Beschichtungen (14,16; 34, 36; 76, 77) und der zentrale Abmessungswert dz aufeinander abgestimmt sind, um die Sichtbarkeit der Information auf einen engen Winkelbereich zu begrenzen.

20. Verfahren nach Anspruch 18 oder 19, **dadurch gekennzeichnet, dass** die beiden Rastermuster (60) in einem Arbeitsgang und mit demselben Laserstrahlschreiber von einer Kartenseite her in die metallischen Beschichtungen (14,16; 34, 36; 76, 77) eingebracht werden.

21. Verfahren nach Anspruch 18,19 oder 20, **dadurch gekennzeichnet, dass** die Rastermuster (60) mit einem bei etwa 1,06 µm arbeitenden Laserstrahlschreiber, besonders bevorzugt mit einem Nd:YAG-basierten Laserstrahlschreiber erzeugt werden.

## Claims

1. A card-shaped data carrier (10), having a card body having a top (12), a bottom and a thickness of more than 100 µm, that is provided on its top and bottom, at least in a sub-region, with a metallic coating (14,16; 34, 36; 76, 77) in each case, the two metallic coatings (14,16; 34, 36; 76, 77) at least partially overlapping each other when looked through, and in which, in the two metallic coatings (14,16; 34, 36; 76, 77), grid patterns (60) are provided that depict a piece of information contrasting with the metallic coatings (14, 16; 34, 36; 76, 77) when looked through in a predetermined viewing direction and are formed by a perforation pattern (18) introduced into the metallic coating (14,16; 34, 36), **characterized in that** the grid patterns of both metallic coatings (14,16; 34, 36; 76, 77) are produced with the same laser beam writer, **in that**, when looked through, the piece of information is perceptible only in a narrow angle range around the predetermined viewing direction, the grid patterns (60) being made up of grid elements having a characteristic dimension, specifically of circular-disc-shaped grid points (20, 42, 44, 50, 52, 56, 62) having a diameter d, and the spacing of the two metallic coatings (14,16; 34, 36; 76, 77) and the characteristic dimension of the grid elements (20, 42, 44, 50, 52, 56, 62) being coordinated with each other to limit the visibility of the piece of information to a narrow angle range.

2. A card-shaped data carrier (10), having a card body having a top (12), a bottom and a thickness of more than 100 µm, that is provided on its top and bottom, at least in a sub-region, with a metallic coating (14,16; 34, 36; 76, 77) in each case, the two metallic coatings (14, 16; 34, 36; 76, 77) at least partially overlapping each other when looked through, and in which, in the two metallic coatings (14,16; 34, 36; 76, 77), grid patterns (60) are provided that depict a piece of information contrasting with the metallic coatings (14, 16; 34, 36; 76, 77) when looked through in a predetermined viewing direction and are formed by a perforation pattern (18) introduced into the metallic coating (14,16; 34, 36), **characterized in that** the grid patterns of both metallic coatings (14,16; 34, 36; 76, 77) are produced with the same laser beam writer, **in that**, when looked through, the piece of information is perceptible only in a narrow angle range around the predetermined viewing direction, the grid patterns (60) being made up of grid elements having varying characteristic dimensions, specifically of circular-disc-shaped grid points (20, 42, 44, 50, 52, 56, 62) having varying diameters, the characteristic dimensions varying about a central value dz, and the spacing of the two metallic coatings (14,16; 34, 36; 76, 77) and the central dimension value dz being coordinated with each other to limit the visibility of the piece of information to a narrow angle range.

3. The data carrier according to claim 1 or 2, **characterized in that** the piece of information depicted by the grid patterns (60) constitutes alphanumeric characters, patterns and/or an image motif.

4. The data carrier according to at least one of claims 1 to 3, **characterized in that** the grid patterns (60) exhibit a congruent pattern region that appears when the data carrier (10) is looked through vertically.

5. The data carrier according to at least one of claims 1 to 4, **characterized in that** the grid patterns (60) exhibit two or more pattern regions that appear when looked through under different viewing angles.

6. The data carrier according to at least one of claims 1 to 5, **characterized in that** the piece of information, when looked through in the predetermined viewing direction, appears having a high contrast to the metallic coating (14,16; 34, 36; 76, 77).

7. The data carrier according to at least one of claims 1 to 6, **characterized in that** the spacing of the two metallic coatings (14,16; 34, 36; 76, 77) is larger than the characteristic dimension d or of the central dimension value dz, preferably **in that** the spacing of the metallic coatings (14,16; 34, 36; 76, 77) is more than twice, especially more than four times, as large as the characteristic dimension or the central dimension value dz.

8. The data carrier according to at least one of claims 1 to 7, **characterized in that** the grid patterns (60) are part of a regular grid structure having a fixed spacing of the grid elements (20, 42, 44, 50, 52, 56, 62).

9. The data carrier according to at least one of claims 1 to 8, **characterized in that** the spacing of adjacent grid elements (20, 42, 44, 50, 52, 56, 62) is larger than the characteristic dimension or the central dimension value dz.

10. The data carrier according to at least one of claims 1 to 9, **characterized in that** the card body (32; 72) consists of a single- or multilayer plastic material, especially a plastic foil.

11. The data carrier according to at least one of claims 1 to 10, **characterized in that** the card body (32; 72) is transparent at least in the region of the grid patterns.

12. The data carrier according to at least one of claims 1 to 11, **characterized in that** the card body (32; 72) exhibits a thickness of 0.1 to 2 mm, preferably of 0.2 to 1.5 mm, particularly preferably of 0.4 to 1 mm.

13. The data carrier according to at least one of claims 1 to 12, **characterized in that**, in the region of the grid patterns (60), the card body (32; 72) is transparent or only weakly absorbent for laser radiation in the near infrared.

14. The data carrier according to at least one of claims 1 to 13, **characterized in that** the grid patterns (60) of both metallic coatings (14,16; 34, 36; 76, 77) are produced with a laser beam writer operating at about 1.06 µm, particularly preferably with an Nd:YAG-based laser beam writer.

15. The data carrier according to at least one of claims 1 to 14, **characterized in that** the data carrier exhibits one or multiple further personalization features, and the grid patterns (60) are manufacturable together with said features.

16. The data carrier according to at least one of claims 1 to 15, **characterized in that** the pattern of a hologram or of a diffraction grating is embossed in at least one of the two metallic coatings (14,16; 34, 36; 76, 77).

17. The data carrier according to at least one of claims 1 to 16, **characterized in that** at least one of the two metallic coatings (14,16; 34, 36; 76, 77) is provided with a cover foil or a protective lacquer layer (58, 59; 73, 75).

18. A method for manufacturing a card-shaped data carrier (10), having the method steps:
a) providing a card body (32; 72) having a top (12), a bottom and a thickness of more than 100 µm,
b) providing the top and bottom of the card body (32; 72) at least in a sub-region with metallic coatings (14,16; 34, 36; 76, 77) that at least partially overlap each other when looked through, and
c) introducing grid patterns (60) with a laser beam writer into the two metallic coatings (14, 16; 34, 36; 76, 77) to depict, contrasting with the metallic coating when looked through in a predetermined viewing direction (46), a piece of information that, when looked through, is perceptible only in a narrow angle range around the predetermined viewing direction, the grid patterns being formed by a perforation pattern (18) introduced into the metallic coating (14,16; 34, 36), the grid patterns (60) being made up of grid elements having a characteristic dimension, specifically of circular-disc-shaped grid points (20, 42, 44, 50, 52, 56, 62) having a diameter d, and the spacing of the two metallic coatings (14,16; 34,36; 76, 77) and the characteristic dimension of the grid elements (20, 42, 44, 50, 52, 56, 62) being coordinated with each other to limit the visibility of the piece of information to a narrow angle range.

19. A method for manufacturing a card-shaped data carrier (10), having the method steps:
a) providing a card body (32; 72) having a top (12), a bottom and a thickness of more than 100 µm,
b) providing the top and bottom of the card body (32; 72) at least in a sub-region with metallic coatings (14,16; 34, 36; 76, 77) that at least partially overlap each other when looked through, and
c) introducing grid patterns (60) with a laser beam writer into the two metallic coatings (14,16; 34, 36; 76, 77) to depict, contrasting with the metallic coating when looked through in a predetermined viewing direction (46), a piece of information that, when looked through, is perceptible only in a narrow angle range around the predetermined viewing direction, the grid patterns being formed by a perforation pattern (18) introduced into the metallic coating (14,16; 34, 36), the grid patterns (60) being made up of grid elements having varying characteristic dimensions, specifically of circular-disc-shaped grid points (20, 42, 44, 50, 52, 56, 62) having varying diameters, the characteristic dimensions varying about a central value dz, and the spacing of the two metallic coatings (14,16; 34, 36; 76, 77) and the central dimension value dz being coordinated with each other to limit the visibility of the piece of information to a narrow angle range.

20. The method according to claim 18 or 19, **characterized in that** the two grid patterns (60) are introduced into the metallic coatings (14,16; 34, 36; 76, 77) from one card side in one operation and with the same laser beam writer.

21. The method according to claim 18,19 or 20, **characterized in that** the grid patterns (60) are produced with a laser beam writer operating at about 1.06 µm, particularly preferably with an Nd:YAG-based laser beam writer.

## Revendications

1. Support de données (10) en forme de carte, comportant un corps de carte ayant une face supérieure (12), une face inférieure, et une épaisseur supérieure à 100 µm, qui sur sa face supérieure et sa face inférieure dans au moins une zone partielle de chacune d'elles est pourvu d'un revêtement métallique (14, 16 ; 34, 36 ; 76, 77), les deux revêtements métalliques (14, 16 ; 34, 36 ; 76, 77) se chevauchant l'un l'autre au moins partiellement lors d'une observation en transparence, et dans lequel il est prévu, dans les deux revêtements métalliques (14, 16 ; 34, 36 ; 76, 77), des motifs de trame (60) qui, dans une direction d'observation prédéfinie, représentent en transparence une information faisant contraste avec les revêtements métalliques (14, 16 ; 34, 36 ; 76, 77), et qui sont formés par un motif de perforations (18), incorporé dans le revêtement métallique (14, 16 ; 34, 36), **caractérisé en ce que** les motifs de trame des deux revêtements métalliques (14, 16 ; 34, 36 ; 76, 77) sont produits par le même graveur laser, **en ce que** l'information en transparence n'est identifiable que dans une plage angulaire étroite autour de la direction d'observation définie, les motifs de trame (60) étant constitués d'éléments de trame ayant une dimension caractéristique, en particulier de points de trame (20, 42, 44, 50, 52, 56, 62) en forme de disque circulaire de diamètre d, et l'écart des deux revêtements métalliques (14, 16 ; 34, 36 ; 76, 77) et la dimension caractéristique des éléments de trame (20, 42, 44, 50, 52, 56, 62) étant adaptés l'un à l'autre, pour limiter la visibilité de l'information à une étroite plage angulaire.

2. Support de données (10) en forme de carte, comportant un corps de carte ayant une face supérieure (12), une face inférieure, et une épaisseur supérieure à 100 µm, qui sur sa face supérieure et sa face inférieure dans au moins une zone partielle de chacune d'elles est pourvu d'un revêtement métallique (14, 16 ; 34, 36 ; 76, 77), les deux revêtements métalliques (14, 16 ; 34, 36 ; 76, 77) se chevauchant l'un l'autre au moins partiellement lors d'une observation en transparence, et dans lequel il est prévu, dans les deux revêtements métalliques (14, 16 ; 34, 36 ; 76, 77), des motifs de trame (60) qui, dans une direction d'observation prédéfinie, représentent en transparence une information faisant contraste avec les revêtements métalliques (14, 16 ; 34, 36 ; 76, 77), et qui sont formés par un motif de perforations (18), incorporé dans le revêtement métallique (14, 16 ; 34, 36), **caractérisé en ce que** les motifs de trame des deux revêtements métalliques (14, 16 ; 34, 36 ; 76, 77) sont produits par le même graveur laser, **en ce que** l'information en transparence n'est identifiable que dans une plage angulaire étroite autour de la direction d'observation définie, les motifs de trame (60) étant constitués d'éléments de trame ayant des dimensions caractéristiques variables, en particulier de points de trame (20, 42, 44, 50, 52, 56, 62) en forme de disque circulaire de diamètre variable, les dimensions caractéristiques variant autour d'une valeur centrale dz et l'écart des deux revêtements métalliques (14, 16 ; 34, 36 ; 76, 77) et la valeur centrale dz des dimensions étant adaptés l'un à l'autre, pour limiter la visibilité de l'information à une étroite plage angulaire.

3. Support de données selon la revendication 1 ou la revendication 2, **caractérisé en ce que** l'information représentée par les motifs de trame (60) représente des caractères alphanumériques, un motif et/ou un motif figuratif.

4. Support de données selon au moins l'une des revendications 1 à 3, **caractérisé en ce que** les motifs de trame (60) présentent une zone de motifs coïncidante, qui apparait en transparence lors d'une observation perpendiculaire du support de données (10).

5. Support de données selon au moins l'une des revendications 1 à 4, **caractérisé en ce que** les motifs de trame (60) présentent au moins deux ou plusieurs zones de motifs, qui apparaissent en transparence pour des angles d'observation différents.

6. Support de données selon au moins l'une des revendications 1 à 5, **caractérisé en ce que** l'information apparaît en transparence dans la direction d'observation prédéfinie, avec un contraste élevé par rapport au revêtement métallique (14, 16 ; 34, 36 ; 76, 77).

7. Support de données selon au moins l'une des revendications 1 à 6, **caractérisé en ce que** l'écart des deux revêtements métalliques (14, 16 ; 34, 36 ; 76, 77) est supérieur à la dimension caractéristique d ou à la valeur centrale dz des dimensions, de préférence que l'écart des revêtements métalliques (14, 16 ; 34, 36 ; 76, 77) est supérieur au double, en particulier supérieur au quadruple de la dimension caractéristique ou de la valeur moyenne dz des dimensions.

8. Support de données selon au moins l'une des revendications 1 à 7, **caractérisé en ce que** les motifs de trame (60) sont une partie d'une structure tramée régulière, présentant un écart fixe entre les éléments de trame (20, 42, 44, 50, 52, 56, 62).

9. Support de données selon au moins l'une des revendications 1 à 8, **caractérisé en ce que** l'écart d'éléments de trame voisins (20, 42, 44, 50, 52, 56, 62) est supérieur à la dimension caractéristique ou à la valeur centrale dz des dimensions.

10. Support de données selon au moins l'une des revendications 1 à 9, **caractérisé en ce que** le corps de carte (32 ; 72) est constitué d'un matériau plastique monocouche ou multicouche, en particulier d'une feuille plastique.

11. Support de données selon au moins l'une des revendications 1 à 10, **caractérisé en ce que** le corps de carte (32 ; 72) est transparent au moins dans la zone des motifs de trame.

12. Support de données selon au moins l'une des revendications 1 à 11, **caractérisé en ce que** le corps de carte (32 ; 72) présente une épaisseur de 0,1 à 2 mm, de préférence de 0,2 à 1,5 mm, d'une manière particulièrement préférée de 0,4 à 1 mm.

13. Support de données selon au moins l'une des revendications 1 à 12, **caractérisé en ce que** dans la zone des motifs de trame (60), le corps de carte (32 ; 72) est transparent, ou est seulement faiblement absorbant pour un rayonnement laser dans l'infrarouge proche.

14. Support de données selon au moins l'une des revendications 1 à 13, **caractérisé en ce que** les motifs de trame (60) des deux revêtements métalliques (14, 16 ; 34, 36 ; 76, 77) sont produits avec un graveur laser travaillant à environ 1,06 µm, d'une manière particulièrement préférée avec un graveur laser à base de Nd:YAG.

15. Support de données selon au moins l'une des revendications 1 à 14, **caractérisé en ce que** le support de données présente une ou plusieurs caractéristiques supplémentaires de personnalisation, et les motifs de trame (60) peuvent être fabriqués en même temps que ces derniers.

16. Support de données selon au moins l'une des revendications 1 à 15, **caractérisé en ce que** la structure d'un hologramme ou d'un réseau de diffraction est gaufrée dans au moins l'un des deux revêtements métalliques (14, 16 ; 34, 36 ; 76, 77).

17. Support de données selon au moins l'une des revendications 1 à 16, **caractérisé en ce qu'**au moins l'un des deux revêtements métalliques (14, 16 ; 34, 36 ; 76, 77) est pourvu d'une feuille de couverture ou d'une couche de vernis de protection (58, 59 ; 73, 75).

18. Procédé de fabrication d'un support de données (10) en forme de carte, comportant les étapes suivantes :
a) de la mise à disposition d'un corps de carte (32 ; 72) ayant une face supérieure (12) et une face inférieure, et une épaisseur supérieure à 100 µm ;
b) de l'application, sur la face supérieure et la face inférieure du corps de carte (32 ; 72), de revêtements métalliques (14, 16 ; 34, 36 ; 76, 77), en chevauchement au moins partiel, dans au moins une zone partielle, l'un avec l'autre lors d'une observation en transparence ;
c) de l'introduction de motifs de trame (60) à l'aide d'un graveur laser, dans les deux revêtements métalliques (14, 16 ; 34, 36 ; 76, 77), pour représenter en transparence (46), dans une direction d'observation prédéfinie, une information faisant contraste avec le revêtement métallique qui n'est identifiable en transparence que dans une plage angulaire étroite autour de la direction d'observation prédéfinie, les motifs de trame étant formés d'un motif de perforations (18) ménagé dans le revêtement métallique (14, 16 ; 34, 36),
les motifs de trame (60) étant constitués d'éléments de trame ayant une dimension caractéristique, en particulier de points de trame (20, 42, 44, 50, 52, 56, 62) en forme de disque circulaire de diamètre d, et l'écart des deux revêtements métalliques (14, 16 ; 34, 36 ; 76, 77) et la dimension caractéristique des éléments de trame (20, 42, 44, 50, 52, 56, 62) étant adaptés l'un à l'autre, pour limiter la visibilité de l'information à une étroite plage angulaire.

19. Procédé de fabrication d'un support de données (10) en forme de carte, comportant les étapes suivantes :
a) de la mise à disposition d'un corps de carte (32 ; 72) ayant une face supérieure (12) et une face inférieure, et une épaisseur supérieure à 100 µm ;
b) de l'application, sur la face supérieure et la face inférieure du corps de carte (32 ; 72), de revêtements métalliques (14, 16 ; 34, 36 ; 76, 77), en chevauchement au moins partiel, dans au moins une zone partielle, l'un avec l'autre lors d'une observation en transparence ;
c) de l'introduction de motifs de trame (60) à l'aide d'un graveur laser, dans les deux revêtements métalliques (14, 16 ; 34, 36 ; 76, 77), pour représenter en transparence (46), dans une direction d'observation prédéfinie, une information faisant contraste avec le revêtement métallique qui n'est identifiable en transparence que dans une plage angulaire étroite autour de la direction d'observation prédéfinie, les motifs de trame étant formés d'un motif de perforations (18) ménagé dans le revêtement métallique (14, 16 ; 34, 36),
les motifs de trame (60) étant constitués d'éléments de trame ayant des dimensions caractéristiques variables, en particulier de points de trame (20, 42, 44, 50, 52, 56, 62) en forme de disque circulaire de diamètre variable, les dimensions caractéristiques variant autour d'une valeur centrale dz et l'écart des deux revêtements métalliques (14, 16 ; 34, 36 ; 76, 77) et la valeur centrale dz des dimensions étant adaptés l'un à l'autre, pour limiter la visibilité de l'information à une étroite plage angulaire.

20. Procédé selon la revendication 18 ou la revendication 19, **caractérisé en ce que** les deux motifs de trame (60) sont incorporés en une seule passe, et avec le même graveur laser, à partir d'un côté de la carte, dans les revêtements métalliques (14, 16 ; 34, 36 ; 76, 77).

21. Procédé selon la revendication 18, la revendication 19 ou la revendication 20, **caractérisé en ce que** les motifs de trame (60) sont produits par un graveur laser travaillant à environ 1,06 µm, d'une manière particulièrement préférée avec un graveur laser à base de Nd:YAG.
